Europäisches Patentamt

European Patent Office

Office européen des brevets

(11) Veröffentlichungsnummer: **0 158 730**
**B1**

(12) **EUROPÄISCHE PATENTSCHRIFT**

(45) Veröffentlichungstag der Patentschrift: **26.09.90**

(21) Anmeldenummer: **84115592.2**

(22) Anmeldetag: **17.12.84**

(51) Int. Cl.⁵: **H 01 B 13/02**

(54) **Vorrichtung mit zwei konzentrisch angeordneten Rohrspeichern.**

(30) Priorität: **19.04.84 DE 3414974**

(43) Veröffentlichungstag der Anmeldung:
**23.10.85 Patentblatt 85/43**

(45) Bekanntmachung des Hinweises auf die
Patenterteilung:
**26.09.90 Patentblatt 90/39**

(84) Benannte Vertragsstaaten:
**AT BE CH DE FR GB IT LI NL SE**

(56) Entgegenhaltungen:
**EP-A-0 066 201
DE-A-2 615 275
FR-A- 895 541
FR-A-2 547 066
GB-A- 589 955**

(73) Patentinhaber: **Siemens Aktiengesellschaft
Wittelsbacherplatz 2
D-8000 München 2 (DE)**

(72) Erfinder: **Oestreich, Ulrich, Dipl.-Ing.
Karl-Witthalm-Strasse 15
D-8000 München 70 (DE)**

Courier Press, Leamington Spa, England.

**Beschreibung**

Die Erfindung betrifft eine Vorrichtung mit zwei konzentrisch zueinander angeordneten, mit wechselnder Schlagrichtung betriebenen Rohrspeichern, denen ausgangsseitig ein gemeinsamer Verseilnippel zugeordnet ist.

Eine Vorrichtung dieser Art ist aus der DE—AS—26 15 275 bekannt, wobei sowohl über den äußeren Rohrspeicher als auch über den inneren Rohrspeicher elektrische Leiter zugeführt und zu einem Bündel verseilt werden.

Aus der FR—A—895 541 ist eine Verseileinrichtung bekannt, bei der im Gleichschlag verseilte elektrische Leiter vor dem Einlaufen in den Verseilnickel durch eine von oben herabfließende Wand einer Kabelfüllmasse hindurchgeführt werden. Derartige Kabelfüllmassen haben in erster Linie die Aufgabe, die Längswasserdichtigkeit der Kabel zu gewährleisten und bestehen aus erster Linie aus Öl—bzw. fetthaltigen Substanzen (z.B. Petrolat) und zeigen deshalb keine Eigenschaften die solchen von Klebematerialien vergleichbar wären.

In vielen Fällen ist es erwünscht, auf eine Kabelseele eine Bespinnung aufzubringen, die meist in Form von zugfesten, vorzugsweise aus Kunststoff bestehenden Fäden besteht. Derartige Probleme treten insbesondere bei Lichtwellenleiter-Kabeln auf, bei denen die empfindlichen Glasfasern vor unzulässigen mechanischen Beanspruchungen geschützt werden sollen. Wenn eine derartige Bespinnung ebenfalls mit abwechselnder Schlagrichtung (SZ-Bespinnung) aufgebracht wird, dann besteht eine Problematik darin, daß die Umkehrstellen nicht ausreichend festgelegt sind. Dadurch ist es möglich, daß Dehnbelastungen des Kabels an diesen Stellen der Bespinnung auftreten, die zu irreversiblen Kabeldehnung führen können. Es ist zwar bekannt, daß durch Aufbringen einer Haltewendel auf die SZ-Bespinnung diesen Schwierigkeiten begegnet werden kann, wobei dies jedoch einen erheblichen zusätzlichen Aufwand erfordert. Außerdem muß für die Aufbringung der Haltewendel der Herstellungsprozeß stets in größeren Abständen angehalten werden.

Der vorliegenden Erfindung liegt die Aufgabe zugrunde, eine Vorrichtung der eingangs genannten Art so weiterzubilden, daß mit ihr die Aufbringung zweilagiger Bespinnungen auf eine Kabelseele in einfacher Weise ermöglicht wird. Erfindungsgemäß wird dies dadurch erreicht, daß den Rohrspeichern als Verseilgut Längskräfte aufnehmende Bespinnungsfäden zugeführt sind, daß am Ausgang der Rohrspeicher in Kombination mit dem Verseilnippel eine Zuführungseinrichtung für ein Klebematerial für die Bespinnungsfäden vorgesehen ist, daß die eigentliche Kabelseele durch den inneren Rohrspeicher hindurchgeführt und am Ausgang der Rohrspeicher mit der kleberbenetzten Bespinnung versehen wird und daß der Verseilnippel beheizt ist.

Trotz der Aufbringung einer zweilagigen SZ-Bespinnung ist ein Aufgehen der Umkehrstellen oder auch nur eine geringere Zugfestigkeit in diesem Bereich vermieden, weil am Ausgang des Rohrspeichers Klebematerial für die Bespinnungsfäden zugeführt wird. Damit wird praktisch im letzten Augenblick, in dem die Bespinnungsfäden noch einzeln zugänglich sind, das Klebematerial aufgebracht.

Es ist deshalb nicht notwendig, bereits vorher mit Klebematerial benetzte Bespinnungsfäden zu verarbeiten, was eine entsprechende Erschwerung des Verarbeitungsvorganges bedingen würde. Die Benetzung der Bespinnungsfäden mit dem Klebematerial ist bei der Erfindung für beide Lagen ausreichend stark und ergibt somit im ausgehärteten Zustand eine hohe Zugfestigkeit und damit einen effektiven Schutz der Kabelseele. Im Prinzip wird die Benetzung durch Kleber nur an den Umkehrstellen benötigt.

Bei der Erfindung sind zusätzliche Halteinrichtungen (wie z.B. Raupen) nach dem Verseilnippel nicht erforderlich, weil das Klebematerial gleich den notwendigen Zusammenhalt auch an den Umkehrstellen gewährleistet. Durch das Beheizen des Verseilnippels ist sichergestellt, daß das Klebematerial stets ausreichend flüssig ist und somit zu hohe Kräfte am Verseilnippel vermieden werden.

Bei einer besonders vorteilhaften Weiterbildung der Erfindung wird die Zuführung des Klebematerials im Bereich des Verseilnippels vorgenommen, also an derjenigen Stelle, an der zum letzten Mal die einzelnen Bespinnungsfäden noch einzeln zugänglich sind.

Sonstige Weiterbildungen der Erfindung sind in Unteransprüchen wiedergegeben.

Die Erfindung und ihre Weiterbildungen werden nachfolgend anhand einer Zeichnung näher erläutert, in der ein Ausführungsbeispiel einer erfindungsgemäßen Vorrichtung dargestellt ist. Zur Erzeugung einer zweilagigen SZ-Bespinnung auf einer Kabelseele SE sind zwei Rohrspeicher RO1 und RO2 vorgesehen, die konzentrisch zueinander verlaufen. Der Rohrspeicher RO1 weist einen größeren Außendurchmesser als der Rohrspeicher RO2 auf. Der Durchmesser des äußeren Rohrspeichers RO1 soll so-viel größer sein, daß der innere Rohrspeicher RO2 zum Einfädeln zurückgezogen werden kann. Die Rohrspeicher RO1 und RO2 werden durch getrennte Antriebseinrichtugen in Form von Schrittmotoren MO1 und MO2 und ihren Enden angetrieben, wobei als Antriebsmittel vorteilhaft Zahnriemen ZR1 und ZR2 vorgesehen sind, welche sowohl die Ritzel der Motoren als auch die auf der Außenseite der Rohrspeicher angebrachten Zahnräder umfassen. Die Kabelseele in Form z.B. mehrerer verseilter Adern o.dgl., insbesondere aus Lichtwellenleiteradern läuft durch die Innenbohrung des Rohrspeichers RO2 von rechts nach links hindurch. Dabei kann die Kabelseele SE entweder in einer vorhergehenden Verarbeitungsstufe verseilt oder hergestellt worden sein oder aber von einer Ablauftrommel abgezogen werden. Eingangsseitig sind bei den beiden Rohrspeichern RO1 und RO2 feststehende Verteilscheiben VT1

und VT2 vorgesehen, die außen an dem hier nicht dargestellten Verseilgestell festgehalten sind und auf deren Innenseite das jeweilige Rohr des Rohrspeichers RO1 bzw. RO2 drehbar gelagert anliegt.

Diese Verteilscheiben VT1 und VT2 bilden somit das rechte Lager für die Rohrspeicher RO1 und RO2. Über den Umfang der Verteilscheiben VT1 und VT2 verteilt sind Bohrungen vorgesehen, durch welche aus zugfestem Material—insbesondere Kunststoffasern (z.B. Aramid)—bestehende Bespinnungsfäden hindurchgeführt sind. Die dem äußeren Rohrspeicher RO1 zugeführten Bespinnungsfäden sind mit BS1 bezeichnet, während die Bespinnungsfäden für den inneren Rohrspeicher RO2 die Bezeichnung BS2 tragen. Am Ausgang der dargestellten Vorrichtung sind an den Rohrspeichern RO1 und RO2 Verseilscheiben VB1 und VB2 angebracht, die also zusammen mit den Rohrspeichern RO1 und RO2 gedreht werden. Dementsprechend ist gegenüber dem Verseilgestell außen eine drehbare Lagerung zumindest der Verseilscheibe VB1 vorzusehen. Im konkreten Fall ist außerdem, da der Rohrspeicher RO1 gegenüber dem Rohrspeicher RO2 drehbar sein soll, ein Lager zwischen der äußeren Stirnseite der Verseilscheibe VB2 und der Innenwand des Rohres des äußeren Rohrspeichers RO1 vorzusehen. Die Verseilscheiben VB1 und VB2 weisen über ihren Umfang verteilt angeordnete Öffnungen auf, durch welche die Bespinnungsfäden BS1 (bei der Verseilscheibe VB1) und BS2 (bei der Verseilscheibe VB2) hindurchgeführt werden. Durch einen am Ausgang der Rohrspeicheranordnung angebrachten Verseilnippel VN werden die Bespinnungsfäden BS1 und BS2 etwa auf den Außendurchmesser der Kabelseele SE zusammengeführt und später gegen diese gedrückt. Der Verseilnippel VN weist dementsprechend einen ausreichend abgerundeten Einlauf auf. Am Ausgang des Verseilnippels VN ist die Kabelseele SE mit einer zweilagigen im SZ-Verfahren aufgebrachten Bespinnung versehen und deshalb mit SEB bezeichnet.

Die Motoren MO1 und MO2 werden synchron zueinander gesteuert, jedoch mit einer solchen Phasenverschiebung, daß die Umkehrpunkte der Verseilung der inneren Lage (hergestellt durch den Rohrspeicher RO2 aus den Bespinnungsfäden BS2) und die der äußeren Lage (hergestellt durch den Rohrspeicher RO1 aus den Bespinnungsfäden BS1) versetzt gegeneinander liegen, vorzugsweise gegenphasig (d.h. um einen Umkehrstellenabstand verschoben). Diese Maßnahme allein ist jedoch nicht ausreichend, um ohne zusätzliche Haltewendel ein Aufgehen der Umkehrstellen zu vermeiden und gleichzeitig die Zugfestigkeitseigenschaften der Bespinnung zu gewährleisten. Um dieses Problem zu lösen ist im Bereich des Verseilnippels VN die Zuführung eines Klebematerials KM vorgesehen, wobei diese so erfolgt, daß sowohl die Fäden BS1 der äußeren Bespinnungslage als auch die Fäden BS2 der inneren Bespinnungslage noch ausreichend mit Klebematerial benetzt werden und im ausgehärteten Zustand sich zu einem zugfesten Gebilde vereinigen. Wenn die Bespinnungen gegenphasig aufgetragen werden, genügt sogar die Benetzung der Umkehrbereiche. Im einzelnen ist im vorliegenden Fall die Ausführung so getroffen, daß ein Behälter KB vorgesehen ist, in dem das Klebematerial KM, vorzugsweise in Form eines Schmelzklebers Untergebracht ist. Dieses Klebematerial KM wird über einen Abschlußstutzen AS dem Verseilnippel VN zugeführt, wobei dieser in seinem Inneren eine ringförmig umlaufende Öffnung RG aufweist. Diese Öffnung RG weist eine oder mehrere am Umfang verteilte, düsenförmige Austrittsöffnungen AO auf, die in Richtung auf die am Eingang des Verseilnippels vorbeilaufenden Bespinnungsfäden BS1 und BS2 zielen und auch einen geschlossenen Spalt darstellen können. Insgesamt hat somit bei dieser Ausgestaltung der Verseilnippel VN gleichzeitig die Eigenschaften eines Spritzwerkzeuges, wobei als Spritzmaterial das Klebematerial KM im Bereich des Einlaufs des Verseilnippels VN austritt und die dort vorbeilaufenden Bespinnungsfäden BS1 und BS2 mit Klebematerial benetzt. Dadurch ist sichergestellt, daß die Fäden jeder einzelnen Lage miteinander verklebt werden und auch ein Verkleben sowohl zwischen der äußeren Lage als auch der inneren Lage eintritt. Um das Klebematerial KM ausreichend flüssig zu halten, ist es zweckmäßig, den Verseilnippel VN und auch den Vorratsbehälter KB entsprechend zu beheizen (bei Schmelzklebern etwa auf 170 bis 190°C). Die sich kreuzenden Garne im Bereich des Verseilnippels VN werden mindestens einseitig mit Schmelzkleber bedeckt, bevor sie sich auf die von rechts durch das Innere des Rohrspeichers RO2 zugeführte Kabelseele SE legen. Wenn diese Kabelseele SE ungetränkt ist, dann kann direkt hinter dem Verseilnippel VN eine Kühlung vorgesehen werden. Wenn eine Tränkung der Kabelseele SE mit einer Füllmasse vorgesehen ist, wirkt diese meist bereits als ausreichende Kühlung, so daß zusätzliche Kühleinrichtungen entfallen können. Die weitere Behandlung der so mit der Bespinnung versehenen Kabelseele SEB, das heißt das Abstreifen überflüssigen Klebematerials, eine etwaige zusätzliche Kleberbeschichtung und die Ummantelung erfolgen (in nicht näher dargestellter Weise) in üblichen Verfahrensschritten.

Die mit dem Klebematerial benetzten, sich kreuzenden Bespinnungsfäden BS1 und BS2 werden so fest aneinander gebunden, daß die Umkehrstellen nicht mehr aufgehen können. Um eine Gute Klebematerial-Benetzung aller Bespinnungsfäden BS1 und BS2 zu sichern, sollen diese vor dem Auflegen vollständig aufgespreizt werden.

Der Durchmesser der dem äußeren Rohrspeicher RO1 zugeordneten Verseilscheibe VB1 kann um 10 bis 30% größer gewählt werden als der des inneren Rohrspeichers RO2.

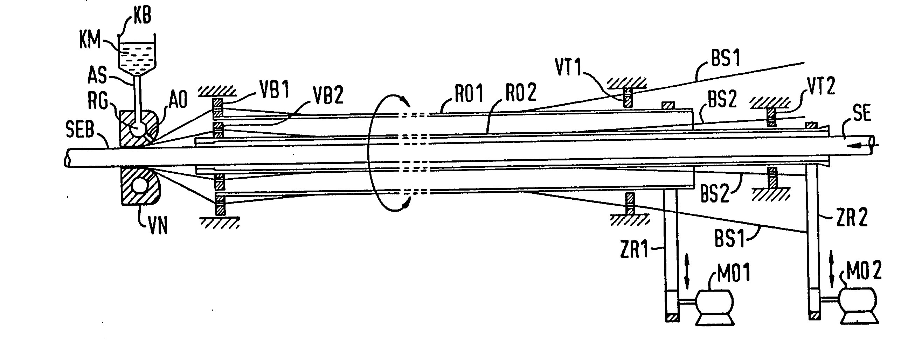

**Patentansprüche**

1. Vorrichtung mit zwei konzentrisch zueinander angeordneten, mit wechselnder Schlag-

richtung betriebenen Rohrspeichern (RO1, RO2), denen ausgangsseitig ein gemeinsamer Verseilnippel (VN) zugeordnet ist, dadurch gekennzeichnet, daß den Rohrspeichern (RO1, RO2) als Verseilgut Längskräfte aufnehmende Bespinnungsfäden BS1, BS2) zugeführt sind, daß am Ausgang der Rohrspeicher (RO1, RO2) in Kombination mit dem Verseilnippel (VN) eine Zuführungseinrichtung (KB) für ein Klebematerial (KM) für die Bespinnungsfäden (BS1, BS2) vorgesehen ist, daß die eigentliche Kabelseele (SE) durch den inneren Rohrspeicher (RO2) hindurchgeführt und am Ausgang der Rohrspeicher (RO1, RO2) mit der kleberbenetzten Bespinnung versehen wird und daß der Verseilnippel (VN) beheizt ist.

2. Vorrichtung nach Anspruch 1, dadurch gekennzeichnet, daß die Zuführung des Klebematerials (KM) zu den Bespinnungsfäden (BS1, BS2) vor Berührung der Kabelseele (SE) erfolgt.

3. Vorrichtung nach einem der vorhergehenden Ansprüche, dadurch gekennzeichnet, daß die Zuführung des Klebematerials (KM) im Bereich des Verseilnippels (VN), vorzugsweise im Verseilnippel selbst vorgenommen ist.

4. Vorrichtung nach Anspruch 3, dadurch gekennzeichnet, daß der Verseilnippel (VN) außen eine Zuführung (AS) für das Klebematerial (KM) aufweist und weiter innen mit mindestens einer Austrittsöffnung (AO), insbesondere in Form einer Düse für das Klebematerial (KM) versehen ist.

5. Vorrichtung nach Anspruch 4, dadurch gekennzeichnet, daß der Verseilnippel (VN) als Spritzwerkzeug für die Ausgabe des Klebematerials (KM) ausgebildet ist.

6. Vorrichtung nach einem der vorhergehenden Ansprüche, dadurch gekennzeichnet, daß als Klebematerial (KM) ein Schmelzkleber verwendet ist.

7. Vorrichtung nach einem der Ansprüche 4 bis 6, dadurch gekennzeichnet, daß die Austrittsöffnung (AO) auf der dem Rohrspeicher (RO1) zugekehrten Seite des Verseilnippels (VN) angeordnet ist.

8. Vorrichtung nach einem der Ansprüche 4 bis 7, dadurch gekennzeichnet, daß die Austrittsöffnung (AO) so angeordnet ist, daß die Bespinnungsfäden (BS1, BS2) an ihr vorbeilaufen und zumindest eine einseitige Beschichtung erfolgt.

9. Vorrichtung nach einem der vorhergehenden Ansprüche, dadurch gekennzeichnet, daß nach dem Verseilnippel (VN) eine Kühlvorrichtung vorgesehen ist.

10. Vorrichtung nach einem der vorhergehenden Ansprüche, dadurch gekennzeichnet, daß nach dem Verseilnippel (VN) eine Abstreifvorrichtung für das Klebematerial vorgesehen ist.

11. Vorrichtung nach einem der vorhergehenden Ansprüche, dadurch gekennzeichnet, daß der Durchmesser der dem äußerem Rohrspeicher (RO1) zugeordnete Verseilscheibe (VB1) um 10 bis 30% größer gewählt ist als der Außendurchmesser des Rohrspeichers (RO1).

12. Vorrichtung nach einem der vorhergehenden Ansprüche, dadurch gekennzeichnet, daß die Durchtrittsöffnung des Verseilnippels (VN) so groß gewählt ist, daß die Bespinnungsfäden (BS1, BS2) völlig aufgespreizt werden.

13. Vorrichtung nach einem der vorhergehenden Ansprüche, dadurch gekennzeichnet, daß die Rohrspeicher (RO1, RO2) einen synchronisierten Antrieb aufweisen, welcher derart phasenverschoben ist, daß die Umkehrstellen der Bespinnungslagen nicht zusammenfallen.

14. Vorrichtung nach einem der Ansprüche 1 bis 13, dadurch gekennzeichnet, daß die Rohrspeicher (RO1, RO2) einen synchronisierten Antrieb aufweisen, welcher derart phasenverschoben ist, daß die Umkehrstellen der Bespinnungslagen gegenphasig zusammenfallen.

**Revendications**

1. Dispositif comportant deux accumulateurs tubulaires (RO1, RO2) concentriques fonctionnant avec des sens alternés de torsion et auxquels est associée, côté sortie, une filière de câblage commune (VN), caractérisé par le fait que des fils de guipage (BS1, BS2) supportant des forces longitudinales sont envoyés, en tant que matériau de câblage, aux accumulateurs tubulaires (RO1, RO2), qu'à la sortie des accumulateurs tubulaires (RO1, RO2) il est prévu, en combinaison avec la filière de câblage (VN), un dispositif (KB) d'amenée d'une colle (KM) pour les fils de guipage (BS1, BS2), que l'âme proprement dite (SE) du câble est guidée dans l'accumulateur tubulaire intérieur (RO2) et est pourvu, à la sortie des accumulateurs tubulaires (RO1, RO2), d'un guipage mouillé par la colle, et que la filière de câblage (VN) est chauffée.

2. Dispositif suivant la revendication 1, caractérisé par le fait que l'amenée de la colle (KM) au fil de guipage (BS1, BS2) est réalisée avant le contact avec l'âme (SE) du câble.

3. Dispositif suivant l'une des revendications précédentes, caractérisé par le fait que l'amenée de la colle (KM) est réalisée dans la zone de la filière de câblage (VN), de préférence dans la filière de câblage elle-même.

4. Dispositif suivant la revendication 3, caractérisé par le fait que la filière de câblage (VN) comporte extérieurement un système (AS) d'amenée de la colle (KM) et est en outre équipée, intérieurement, d'au moins une ouverture de sortie (AO), notamment sous la forme d'une buse pour la colle (KM).

5. Dispositif suivant la revendication 4, caractérisé par le fait que la filière de câblage (VN) est agencée sous la forme d'un outil d'injection pour la délivrance de la colle (KM).

6. Dispositif suivant l'une des revendications précédentes, caractérisé par le fait qu'on utilise comme colle (KM) une colle fusible.

7. Dispositif suivant l'une des revendications 4 à 6, caractérisé par le fait que l'ouverture de sortie (AO) est située sur le côté de la filière de câblage (VN), tourné vers l'accumulateur tubulaire (RO1).

8. Dispositif suivant l'une des revendications 4 à 7, caractérisé par le fait que l'ouverture de sortie (AO) est disposée de manière que les fils de guipage (BS1, BS2) passent devant cette ouverture et qu'il se produit au moins une enduction unilatérale.

9. Dispositif suivant l'une des revendications précédentes, caractérisé par le fait qu'un dispositif de refroidissement est prévu en aval de la filière de câblage (VN).

10. Dispositif suivant l'une des revendications précédentes, caractérisé par le fait qu'un dispositif de raclage pour la colle est prévu en aval de la filière de câblage (VN).

11. Dispositif suivant l'une des revendications précédentes, caractérisé par le fait que le diamètre de la plaque de répartition (VB) associée à l'accumulateur tubulaire extérieur (RO1) est choisi supérieur de 10 à 30% au diamètre extérieur de l'accumulateur tubulaire (RO1).

12. Dispositif suivant l'une des revendications précédentes, caractérisé par le fait que l'ouverture de passage de la filière de câblage (VN) est choisie avec une taille telle que les fils de guipage (BS1, BS2), sont complètement écartés.

13. Dispositif suivant l'une des revendications précédentes, caractérisé par le fait que les accumulateurs tubulaires (RO1, RO2) possèdent un dispositif d'entraînement synchronisé, qui est déphasé de telle sorte que les points d'inversion des couches de guipage ne coïncident pas.

14. Dispositif suivant l'une des revendications 1 à 13, caractérisé par le fait que les accumuateurs tubulaires (RO1, RO2) possèdent un dispositif d'entraînement synchronisé, qui produit un déphasage tel que les points de renvoi des couches de guipage coïncident en opposition de phase.

**Claims**

1. Apparatus comprising two tubular stores (RO1, RO2) disposed concentrically relative to one another and operated with a changing direction of lay to which a common stranding nipple (VN) is assigned on the output side, characterized in that web threads (BS1, BS2) that absorb longitudinal forces are supplied to the tubular stores (RO1, RO2) as stranding material, in that a feed device (KB) for an adhesive material (KM) for the web threads (BS1, BS2) is provided at the output of the tubular stores (RO1, RO2) in combination with the stranding nipple (VN), in that the actual cable core (SE) is led through the inner tubular store (RO2) and is provided at the output of the tubular stores (RO1, RO2) with the adhesive-moistened spun covering, and in that the stranding nipple (VN) is heated.

2. Apparatus according to Claim 1, characterized in that the feeding of the adhesive material (KM) to the web threads (BS1, BS2) takes place before contact with the cable core (SE).

3. Apparatus according to one of the preceding claims, characterized in that the feeding of the adhesive material (KM) is undertaken in the region of the stranding nipple (VN), preferably in the stranding nipple itself.

4. Apparatus according to Claim 3, characterized in that the stranding nipple (VN) has a feeder (AS) outside for the adhesive material (KM), and is provided further inside with at least one discharge opening (AO), preferably in the form of a jet for the adhesive material (KM).

5. Apparatus according to Claim 4, characterized in that the stranding nipple (VN) is designed as an injection tool for the output of the adhesive material (KM).

6. Apparatus according to one of the preceding claims, characterized in that a hot-melt adhesive is used as adhesive material (KM).

7. Apparatus according to one of Claims 4 to 6, characterized in that the discharge opening (AO) is disposed on the side of the stranding nipple (VN) facing the tubular store (RO1).

8. Apparatus according to one of Claims 4 to 7, characterized in that the discharge opening (AO) is disposed so that the web threads (BS1, BS2) run past it and coating takes place on at least one side.

9. Apparatus according to one of the preceding claims, characterized in that a cooling device is provided downstream of the stranding nipple (VN).

10. Apparatus according to one of the preceding claims, characterized in that a stripping device for the adhesive material is provided downstream of the stranding nipple (VN).

11. Apparatus according to one of the preceding claims, characterized in that the diameter of the stranding disc (VB1) assigned to the outer tubular store (RO1) is selected to be 10 to 30% larger than the outside diameter of the tubular store (RO1).

12. Apparatus according to one of the preceding claims, characterized in that the passage opening of the stranding nipple (VN) is selected to be so large that the web threads (BS1, BS2) are completely spread apart.

13. Apparatus according to one of the preceding claims, characterized in that the tubular stores (RO1, RO2) have a synchronized drive which is phase-shifted in a manner such that the reversing locations of the web plies do not coincide.

14. Apparatus according to one of Claims 1 to 13, characterized in that the tubular stores (RO1, RO2) have a synchronized drive which is phase-shifted in a manner such that the reversing locations of the web plies coincide in antiphase.